# FASCICULE DE BREVET EUROPEEN

(11) **EP 1 129 900 B1**
(45) Date de publication et mention de la délivrance du brevet: **01.02.2006**
(21) Numéro de dépôt: 01400543.3
(22) Date de dépôt: 01.03.2001
(51) Int. Cl.: B60Q 1/12

(54) **Procédé et dispositif d'éclairage pour véhicule automobile.**
Verfahren und Einrichtung für Kraftfahrzeugbeleuchtung
Process and device for vehicle lighting

(30) Priorité: 02.03.2000 FR 0002677
(43) Date de publication de la demande: 05.09.2001
(73) Titulaire: Peugeot Citroen Automobiles, 92200 Neuilly Sur Seine (FR)
(72) Inventeur: Serezat, Laurent, 78390 Bois d'Arcy (FR)
(74) Mandataire: De Cuenca, Emmanuel Jaime

(56) Documents cités:
- DE-A- 19 601 572
- DE-A- 19 722 457
- DE-A- 19 723 045
- DE-A- 19 803 002

## Description

L'invention se rapporte à un procédé et à un dispositif d'éclairage pour véhicule automobile.

L'invention concerne plus particulièrement un système d'éclairage à fonction virage, c'est à dire comportant des projecteurs pour l'émission de faisceaux latéraux destinés à s'adapter au tracé de la route.

Il est connu par le document EP864462 (préambule des revendications 1 resp. 2) un système d'éclairage pour véhicule automobile comportant deux projecteurs à coupure droite pour l'émission de faisceaux de virage. Ce système est pourvu de moyens de commande de la puissance d'alimentation des projecteurs en fonction du braquage des roues. En particulier, ce système détermine le braquage des roues du véhicule et commande la tension d'alimentation des projecteurs en fonction du braquage des roues, pour allumer au moins le projecteur situé à l'intérieur du virage lorsque le braquage des roues est supérieur à un seuil déterminé.

Si le système d'éclairage décrit dans le document EP864462 permet de réaliser une fonction virage pour les éclairages proches, il s'avère inadapté ou insuffisant dans certaines conditions de fonctionnement du véhicule.

A cette fin, le procédé d'éclairage selon l'invention, par ailleurs conforme à la définition générique qu'en donne le préambule ci-dessus, est essentiellement caractérisé en ce qu'il comporte une étape de détermination d'au moins une autre condition de fonctionnement du véhicule pour commander la tension d'alimentation des projecteurs en fonction de cette condition de fonctionnement supplémentaire.

Un autre but de la présente invention est de proposer un dispositif d'éclairage pour véhicule automobile amélioré par rapport à l'art antérieur.

Ce but est atteint par le fait que le dispositif d'éclairage pour véhicule automobile comporte au moins deux premiers projecteurs pour l'émission de faisceaux de virage, deux seconds projeteurs pour l'émission de faisceaux de code, des moyens d'acquisition de données relatives aux conditions de fonctionnement du véhicule aptes à déterminer le braquage des roues du véhicule, des moyens de commande de la tension d'alimentation des premiers projecteurs en fonction du braquage des roues, pour allumer au moins le premier projecteur situé à l'intérieur du virage lorsque le braquage des roues est supérieur à un seuil d'allumage déterminé, les moyens de commande étant disposés dans un réseau électronique multiplexé et comportent au moins un calculateur relié aux moyens d'acquisition de données, des moyens d'actionnement respectifs des premiers et seconds projecteurs reliés au calculateur, les moyens d'actionnement des premiers projecteurs étant conformés et commandés pour délivrer une tension déterminée et variable aux premiers projecteurs en fonction d'au moins une autre condition de fonctionnement du véhicule.

Par ailleurs, l'invention peut comporter l'une ou plusieurs des caractéristiques suivantes :
- les moyens d'acquisition de données comportent des moyens de détermination de la vitesse du véhicule, le calculateur de commande des moyens d'actionnement des premiers projecteurs assurant l'éclairage desdits premiers projecteurs en fonction de la vitesse du véhicule,
- les moyens d'acquisition de données comportent des moyens de détection de l'état d'un indicateur de changement de direction droite/gauche du véhicule, le calculateur commandent les moyens d'actionnement des premiers projecteurs pour assurer l'allumage au moins du premier projecteur situé du côté du changement de direction sélectionné,
- le braquage des roues est supérieur à un seuil d'allumage déterminé dans la direction opposée à la direction sélectionnée par l'indicateur de changement de direction, le calculateur de commande assure l'allumage au moins du premier projecteur situé du côté du virage défini par le braquage des roues,
- lorsque le braquage des roues croît dans la direction opposée à la direction sélectionnée par l'indicateur de changement de direction, le calculateur assure l'allumage au moins du premier projecteur qui est situé du côté du braquage croissant des roues,
- lorsque le braquage des roues est supérieur à un seuil d'allumage déterminé dans la direction opposée à la direction sélectionnée par l'indicateur de changement de direction, le calculateur de commande assure la diminution ou l'extinction de l'éclairage du premier projecteur qui est situé du côté sélectionné par l'indicateur de changement de direction,
- lorsque le braquage des roues croît dans la direction opposée à la direction sélectionnée par l'indicateur de changement de direction, le calculateur de commande assure la diminution ou l'extinction de l'éclairage du premier projecteur qui est situé du côté sélectionné par l'indicateur de changement de direction,
- le véhicule comporte des moyens de commande manuelle de l'allumage des premiers projecteurs, les moyens d'acquisition de données comportant des moyens de détection de l'état d'activation des moyens de commande manuelle, le calculateur commande les moyens d'actionnement des premiers projecteurs, pour assurer, indépendamment du braquage des roues, l'allumage du ou des premiers projecteurs sélectionnés manuellement,
- les moyens d'acquisition de données relatives aux conditions de fonctionnement du véhicule comportent un capteur de mesure de l'angle du volant, le ou les calculateurs de commande déterminant le braquage des roues en fonction de la mesure de l'angle du volant du véhicule, et les moyens d'acquisition de données comportent des moyens de détection du fonctionnement normal du capteur de mesure de l'angle du volant, et en ce que le calculateur inhibe la fonction d'allumage des premiers projecteurs en fonction du braquage des roues lorsqu'une anomalie est détectée dans le fonctionnement du capteur d'angle,
- les moyens d'acquisition de données comportent des moyens de détection du fonctionnement normal des moyens d'actionnement des premiers projecteurs, le calculateur inhibe la fonction d'allumage des premiers projecteurs en fonction du braquage des roues lorsque qu'une anomalie est détectée dans le fonctionnement desdits moyens d'actionnement.

D'autres particularités et avantages apparaîtront à la lecture de la description ci-après faite en référence aux figures dans lesquelles :
- la figure 1 représente une vue de dessus schématique d'un véhicule comportant deux projecteurs à fonction virage,
- la figure 2 représente schématiquement l'architecture et le fonctionnement d'un exemple de réalisation préféré du dispositif d'éclairage conforme à l'invention,
- la figure 3 représente un exemple de réalisation préféré selon l'invention de la courbe représentative de la tension d'alimentation d'un projecteur de virage en fonction de l'angle volant du véhicule,
- la figure 4 représente un second mode de réalisation conforme à l'invention de la courbe représentative de la tension d'alimentation d'un projecteur de virage en fonction de l'angle volant du véhicule,
- les figures 5 à 7 représentent respectivement les variations de trois seuils de braquage des roues du véhicule en fonction de la vitesse du véhicule.

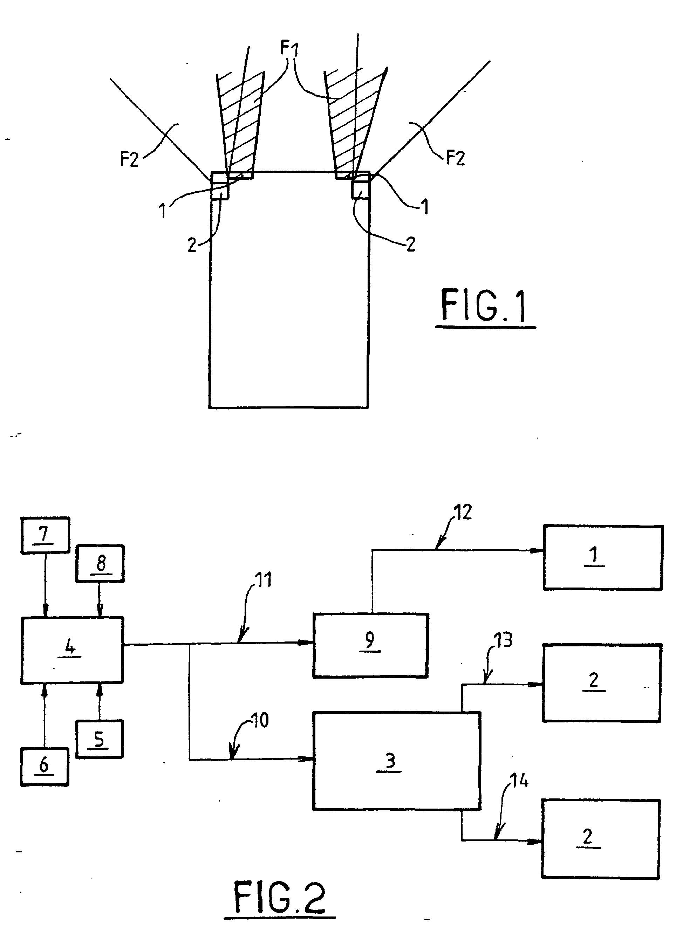

Le dispositif d'éclairage représenté aux figures 1 et 2 comporte deux projecteurs 1 pour l'émission de faisceaux (F1) de codes et deux projecteurs 2 à fonction virage qui assure un éclairage sensiblement latéral (faisceaux F2). Le véhicule comporte également des projecteurs de faisceaux lointains non représentés. Les projecteurs de code 1 et les projecteurs 2 de virage sont disposés à l'avant du véhicule. Classiquement, les projecteurs 2 de virage peuvent être des projecteurs à coupure droite, par exemple des projecteurs dits anti-brouillard.

En se référant à présent à la figure 2, le dispositif d'éclairage selon l'invention comporte des moyens 5, 6, 7, 8 d'acquisition de données relatives aux conditions de fonctionnement du véhicule. Les moyens 5, 6, 7, 8 d'acquisition de données sont reliés à des moyens 3, 4, 9 de commande de la tension T d'alimentation des projecteurs 1, 2.

Plus précisément, l'architecture électronique du dispositif d'éclairage peut-être une architecture multiplexée, par exemple du type VAN.

Les moyens 3, 4, 9 de commande des projecteurs 1, 2 comportent un calculateur 4 de commande, par exemple le Boîtier de Servitude Intelligent (BSI) du véhicule.

Le calculateur 4 de commande est relié par une première ligne ou bus 11 à un premier actionneur 9. Le premier actionneur 9 est relié par une ligne ou bus 12 aux projecteurs 1 de code et assure ou non l'allumage de ces projecteurs en fonction des commandes numériques délivrées par le calculateur 4. Par exemple, le premier actionneur 9 commande la tension d'alimentation des projecteurs 1 de code en mode "tout ou rien", c'est à dire que les deux projecteurs 1 de code sont simultanément soit allumés soit éteints.

Le calculateur 4 de commande est relié par une seconde ligne ou bus 10 à un second actionneur 3. Le second actionneur 3 est relié quant à lui aux deux projecteurs 2 de virage par deux lignes distinctes 13, 14. Le second actionneur 3 est conformé pour pouvoir délivrer une tension T d'alimentation variable aux projecteurs 2 de virage. C'est à dire que, en fonction des commandes numériques délivrées par le calculateur 4, le second actionneur 3 peut allumer ou éteindre indépendamment chacun des deux projecteurs 2 de virage. De même, le second actionneur 3 peut délivrer une tension variable et distincte à chacun des deux projecteurs 2 de virage.

Bien entendu, il est possible d'envisager un dispositif dans lequel un unique actionneur assure l'alimentation aussi bien des projecteurs 1 de code que des projecteurs 2 de virage. -

Les moyens 5, 6, 7, 8 d'acquisition de données relatives aux conditions de fonctionnement du véhicule comportent un capteur 5 d'angle A du volant du véhicule. De cette façon, lorsque le braquage des roues est supérieur à un seuil d'allumage E3 déterminé, le calculateur 4 peut commander le second actionneur 3 pour allumer au moins le premier projecteur 2 situé à l'intérieur du virage.

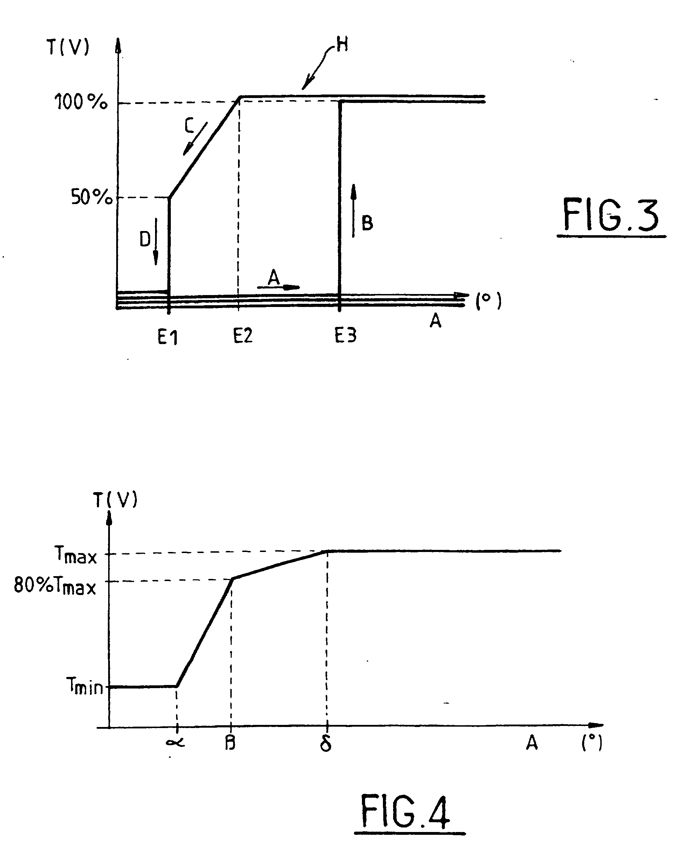

La figure 3 représente un exemple de réalisation préféré de la courbe représentative de la tension T appliquée à un projecteur 2 de virage en fonction de l'angle A du volant du véhicule. Par soucis de simplification, seule la courbe de la tension T appliquée à un projecteur 2 est représentée à la figure 3. La courbe de la tension T appliquée à l'autre projecteur 2 de virage peut être symétrique par rapport à l'axe des ordonnées (tension T).

La loi de commande de la tension T d'alimentation des projecteurs en fonction de l'angle A volant est donnée, par exemple, par une modélisation contenue dans une mémoire reliée ou intégrée au calculateur 4. De même, on peut envisager que le calculateur 4 peut contenir une ou plusieurs modélisations d'éclairage en fonction du type de véhicule et/ou du pays d'utilisation du véhicule et/ou de la demande de l'utilisateur. Par ailleurs, un périphérique apte à être relié au calculateur 4 peut permettre de modifier et/ou de changer la loi de commande de l'éclairage des projecteurs 2 de virage.

En se référant à la figure 3, lorsque l'angle A volant, c'est-à-dire le braquage des roues, est supérieur à un seuil E3 dit d'allumage, au moins le projecteur 2 situé à l'intérieur du virage est allumé. Par exemple, dès que le braquage des roues est supérieur au seuil d'allumage E3, les moyens 3, 4 de commande délivrent au projecteur 2 une tension T d'alimentation maximale (100%) correspondant à un éclairage sensiblement maximal. Lorsque l'angle A volant reste supérieur au seuil d'allumage E3, la tension T délivrée aux projecteurs 2 de virage reste de préférence sensiblement constante et maximale, même si l'angle A volant croît ou décroît au-dessus de ce seuil E3.

Selon l'invention, lorsque l'angle A volant décroît et redevient inférieur à un seuil E1 dit d'extinction, qui est inférieur au seuil d'allumage E3, les moyens 3, 4 de commande assurent l'extinction du projecteur 2 concerné.

Lorsque l'angle A volant décroît et devient inférieur au seuil d'allumage E3 mais supérieur à un seuil intermédiaire E2 qui est compris entre les seuils d'allumage E3 et d'extinction E1, la tension d'alimentation T délivrée au projecteur 2 peut rester sensiblement constante et maximale.

Enfin, lorsque l'angle A au volant continue de décroître entre le seuil intermédiaire E2 et le seuil d'extinction E1, la tension d'alimentation T délivrée au projecteur 2 décroît avec l'angle A volant. De préférence, entre les seuils intermédiaire E2 et d'extinction E1, la tension T délivrée au projecteur 2 est proportionnelle à l'angle A volant.

Par exemple, la tension d'alimentation T délivrée au projecteur 2 décroît entre les seuils intermédiaire E2 et d'extinction E1, de façon à atteindre une tension comprise entre 40 et 60% environ de la tension maximale d'éclairage du projecteur 2 lorsque l'angle A volant tend vers le seuil d'extinction E1. De préférence, la tension d'alimentation T délivrée au projecteur 2 tend vers 50% environ de la tension maximale lorsque l'angle A volant tend vers le seuil d'extinction E1.

Ainsi, la courbe représentative de la tension T appliquée au projecteur 2 de virage en fonction de l'angle A du volant présente une hystérésis H. Le sens de déroulement de l'hystérésis H est symbolisé par les flèches A, B, C et D.

Avantageusement, les moyens 5, 6, 7, 8 d'acquisition de données peuvent comporter des moyens 6 de détermination de la vitesse V du véhicule, tel qu'un capteur mesurant la vitesse du véhicule (figure 2).

Selon l'invention, les moyens 3, 4 de commande peuvent délivrer aux projecteurs 2 de virage une tension T d'alimentation qui est fonction de la vitesse V du véhicule. Par exemple, les moyens 3, 4 de commande peuvent déterminer l'un ou plusieurs des seuils E1, E2, E3 en fonction de la vitesse V du véhicule.

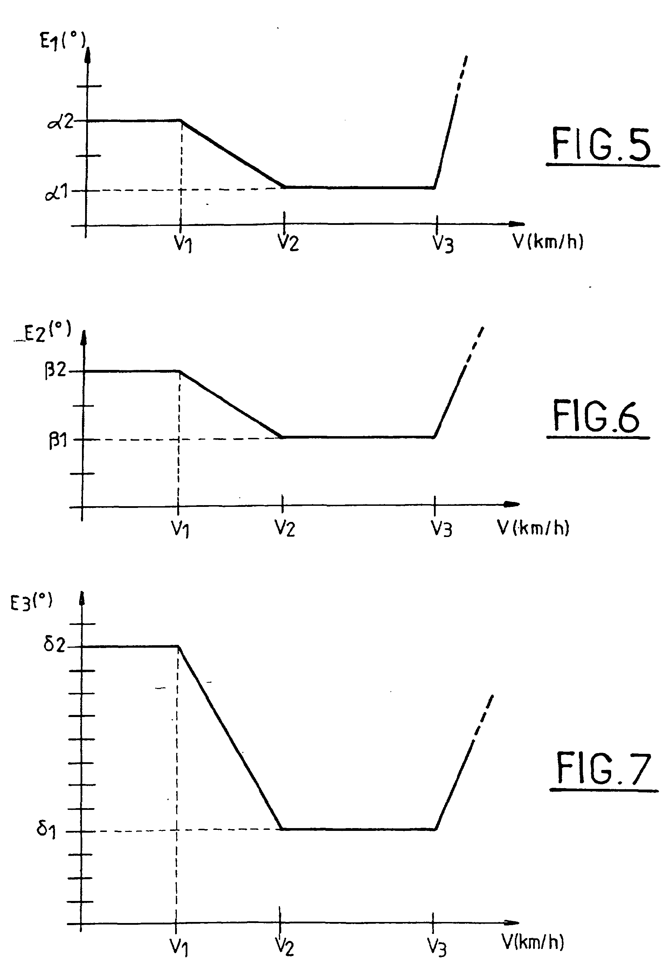

La figure 7 représente un exemple de variation du seuil d'allumage E3 en fonction de la vitesse V du véhicule. En particulier, lorsque la vitesse V du véhicule est inférieure ou égale à une première vitesse V1 déterminée, comprise par exemple entre 10 et 30km/h environ, le seuil d'allumage E3 est sensiblement égal à une première valeur constante déterminée δ2.

De préférence, la première vitesse V1 est sensiblement égale à 20 km/h. La première valeur constante δ2 est quant à elle comprise entre 15 et 25 degrés environ et de préférence de l'ordre de 20 degrés.

Par ailleurs, quand la vitesse V du véhicule est comprise entre la première vitesse V1 et une seconde vitesse V2 déterminée supérieure à la première vitesse V1, le seuil d'allumage E3 décroît lorsque la vitesse V du véhicule augmente. La seconde vitesse V2 est comprise, par exemple, entre 40 et 60 km/h environ et est de préférence égale à 50km/h. De préférence également, le seuil d'allumage E3 est inversement proportionnel à la vitesse V entre les première V1 et seconde V2 vitesses.

Lorsque la vitesse V du véhicule est comprise entre la seconde V2 et une troisième vitesse V3 déterminée supérieure à la seconde vitesse V2, le seuil d'allumage E3 est égal à une seconde constante δ1. La seconde constante δ1 est comprise entre trois et sept degrés environ et est de préférence égale à cinq degrés. La troisième vitesse V3 est comprise, par exemple, entre 90 et 110 km/h environ et est de préférence égale à 100 km/h.

Enfin, lorsque la vitesse V du véhicule est supérieure à la troisième vitesse V3, le seuil d'allumage E3 peut croître avec la vitesse V du véhicule. De préférence, au-delà de la troisième vitesse V3, le seuil d'allumage E3 croît linéairement avec la vitesse V du véhicule.

De même, comme représenté aux figures 5 et 6, les seuils d'extinction E1 et intermédiaire E2, peuvent varier en fonction de la vitesse V du véhicule. Par exemple, les courbes de variation des seuils d'extinction E1 et intermédiaire E2 en fonction de la vitesse V du véhicule peuvent avoir la même allure que la courbe décrite en référence à la figure 7 pour le seuil d'allumage E3.

Cependant, lorsque la vitesse V du véhicule est inférieure ou égale à la première vitesse V1, le seuil d'extinction E1 est sensiblement égal à une troisième constante déterminée α2 comprise entre trois et sept degrés environ et de préférence égale à cinq degrés.

Lorsque la vitesse V du véhicule est inférieure ou égale à la première vitesse V1, le seuil intermédiaire E2 est quant à lui sensiblement égal à une quatrième constante β2 comprise entre sept et treize sept degrés environ et de préférence égale à dix degrés.

Entre la seconde V2 et une troisième vitesse V3, le seuil d'extinction E1 est égal à une constante α1, de préférence sensiblement nulle tandis que le seuil intermédiaire E2 est sensiblement égal à une cinquième constante β1. La cinquième constante β1 est comprise, par exemple, entre zéro et cinq degrés environ et est de préférence égale à trois degrés.

La figure 4 représente une variante selon l'invention de la courbe représentative de la tension T délivrée à un projecteur 2 en fonction de l'angle A du volant.

Comme représenté à la figure 4, lorsque l'angle A au volant est inférieur à un premier seuil α, les moyens 3, 4 de commande délivrent une tension minimale Tmin au projecteur 2 de virage. La tension minimale Tmin appliquée au projecteur 2 de virage correspond, par exemple, à un état éteint du projecteur 2.

Lorsque l'angle au volant A est compris entre le premier seuil α et un seuil β intermédiaire supérieur au premier seuil α, la tension T délivrée au projecteur 2 de virage croît avec l'angle A au volant. De préférence, entre le premier seuil α et le seuil intermédiaire β, la tension T délivrée au projecteur 2 de virage est proportionnelle à l'angle A au volant. Par ailleurs, lorsque l'angle au volant A tend vers le seuil intermédiaire β, la tension T délivrée au projecteur 2 de virage tend, par exemple, vers 50 à 80% de la tension maximale Tmax appliquée au projecteur. La tension maximale Tmax correspond à un éclairage maximal du projecteur 2.

De plus, lorsque l'angle A au volant est compris entre le seuil intermédiaire β et un second seuil δ, la tension T délivrée au projecteur 2 de virage croît lorsque l'angle A au volant croît. Par exemple, entre le seuil intermédiaire β et le second seuil δ, la tension T délivrée au projecteur 2 de virage est proportionnel à l'angle au volant A. De préférence, la tension T délivrée au projecteur 2 de virage croît avec une pente plus élevée lorsque l'angle au volant A est compris entre le seuil intermédiaire β et le second seuil δ, qu'entre le premier seuil α le seuil β intermédiaire.

De plus, lorsque l'angle A au volant atteint le troisième seuil δ, la tension T délivrée au projecteur 2 est sensiblement égale à la tension maximale Tmax. Enfin, lorsque l'angle au volant A est supérieur au-second seuil δ, la tension T délivrée au projecteur 2 reste sensiblement égale à la tension maximale Tmax.

Comme précédemment, le premier seuil α et/ou le second seuil δ et/ou le seuil intermédiaire β peuvent varier en fonction de la vitesse V du véhicule.

En particulier, les courbes de variation du premier seuil α et/ou du second seuil δ et/ou du seuil intermédiaire β, en fonction de la vitesse V du véhicule peuvent avoir la même allure que la courbe décrite en référence à la figure 7.

Les valeurs des première V1, seconde V2 et troisième vitesses V3 sont par exemple identiques aux valeurs décrites ci-dessus. Cependant, lorsque la vitesse V du véhicule est inférieure à la première vitesse V1, le premier seuil α est compris entre 20 et 40 degrés environ et de préférence de l'ordre de 30 degrés, le second seuil δ est compris entre 100 et 140 degrés environ et de préférence de l'ordre de 120 degrés, tandis que le seuil intermédiaire β est compris entre 30 et 50 degrés environ et de préférence de l'ordre de 40 degrés.

De la même façon, lorsque la vitesse V du véhicule est comprise entre les seconde V2 et troisième vitesses V3, le premier seuil α est compris entre 5 et 15 degrés environ et de préférence de l'ordre de 10 degrés, le second seuil δ est compris entre 30 et 50 degrés environ et de préférence de l'ordre de 40 degrés, tandis que le seuil intermédiaire β est compris entre 10 et 30 degrés environ et de préférence de l'ordre de 20 degrés.

Avantageusement, les moyens d'acquisition de données peuvent comporter des moyens 7 de détection de l'état d'un indicateur de changement de direction droite/gauche du véhicule.

Ainsi, les moyens 3, 4 de commande peuvent déclencher automatiquement l'allumage au moins du projecteur 2 de virage situé du côté de la direction sélectionnée par l'utilisateur du véhicule.

De préférence, lorsque le braquage des roues augmente ou est supérieur à un seuil déterminé dans la direction opposée à la direction sélectionnée par l'indicateur de changement de direction, les moyens de commande 3, 4 peuvent allumer le projecteur 2 de virage situé du côté du virage défini par le braquage des roues et/ou assurer la diminution ou l'extinction de l'éclairage du projecteur 2 de virage qui est situé du côté sélectionné par l'indicateur de changement de direction.

De plus, le véhicule peut comporter des moyens 8 de commande manuelle de l'allumage des projecteurs de virage. Ces moyens 8 de commande manuelle de l'allumage des projecteurs 2 de virage peuvent être constitués d'au moins un interrupteur que l'utilisateur actionne pour allumer ou éteindre le ou les projecteurs de virage. Le ou les interrupteurs peuvent également être conformés pour permettre de commander manuellement l'intensité désirée dans l'éclairage des projecteurs 2 de virage.

Les moyens d'acquisition de données peuvent détecter l'état d'activation des moyens 8 de commande manuelle, de façon que les moyens 3, 4 commande assurent, indépendamment du braquage des roues, l'allumage du ou des premiers projecteurs 2 sélectionnés par l'utilisateur.

En outre, les moyens d'acquisition de données peuvent comporter des moyens de détection du fonctionnement normal du capteur 5 de mesure de l'angle A du volant. Ainsi, lorsque le capteur 5 d'angle émet un signal d'erreur, le calculateur 4 peut inhiber la fonction d'allumage des projecteurs 2 de virage en fonction du braquage des roues.

De la même façon, les moyens d'acquisition de données peuvent comporter des moyens de détection du fonctionnement normal des moyens d'actionnement 3 des projecteurs 2 de virage. Ainsi, lorsque les moyens d'actionnement 3 émettent un signal d'erreur, le calculateur 4 peut inhiber la fonction d'allumage des projecteurs 2 de virage en fonction du braquage des roues.

Avantageusement, pour déterminer le ou les seuils de braquage, les moyens d'acquisition peuvent également utiliser l'une ou plusieurs des paramètres suivants : la vitesse de variation de l'angle volant, les accélérations longitudinales et transversales du véhicule et la vitesse de lacet du véhicule.

On conçoit donc aisément que le dispositif d'éclairage conforme à l'invention offre un éclairage de virage plus performant que ceux de l'art antérieur.

Enfin, bien que l'invention ait été décrite en liaison avec des modes de réalisation particuliers, elle comprend tous les équivalents techniques des moyens décrits.

## Revendications

1. Procédé d'éclairage pour véhicule automobile ayant au moins deux projecteurs (1, 2) pour l'émission de faisceaux (F2) de virage, comportant une étape de détermination du braquage des roues du véhicule, une étape de comparaison du braquage des roues avec un premier seuil (α) de braquage déterminé, et une étape de commande de la tension d'alimentation des projecteurs en fonction du braquage des roues, pour allumer au moins le projecteur (2) situé à l'intérieur du virage lorsque le braquage des roues est supérieur au premier seuil (α), **caractérisé en ce qu'**il comporte une étape d'acquisition de données relatives à une autre condition de fonctionnement du véhicule pour commander la tension d'alimentation des projecteurs en fonction de cette condition de fonctionnement supplémentaire.

2. Dispositif d'éclairage pour véhicule automobile comportant au moins deux premiers projecteurs (2) pour l'émission de faisceaux (F2) de virage, deux seconds projeteurs (1) pour l'émission de faisceaux (F1) de code, des moyens (5, 6, 7, 8) d'acquisition de données relatives aux conditions de fonctionnement du véhicule aptes à déterminer le braquage des roues du véhicule, des moyens (3, 4) de commande de la tension (T) d'alimentation des premiers projecteurs (2) en fonction du braquage des roues, pour allumer au moins le premier projecteur (2) situé à l'intérieur du virage lorsque le braquage des roues est supérieur à un seuil d'allumage (E3) déterminé, **caractérisé en ce que** les moyens (3, 4) de commande sont disposés dans un réseau électronique multiplexé et comportent au moins un calculateur (4) relié aux moyens (5, 6, 7, 8) d'acquisition de données, des moyens d'actionnement (3, 9) respectifs des premiers (2) et seconds (1) projecteurs reliés au calculateur (4), et **en ce que** les moyens d'actionnement (3) des premiers (2) projecteurs sont conformés et commandés pour délivrer une tension (T) déterminée et variable aux premiers projecteurs (2) en fonction des données acquises et relative à une autre condition de fonctionnement du véhicule.

3. Dispositif d'éclairage selon la revendication 2,
**caractérisé en ce que** les moyens (5, 6, 7, 8) d'acquisition de données comportent des moyens (6) de détermination de la vitesse (V) du véhicule, et **en ce que** le calculateur (4) de commande des moyens d'actionnement (3) des premiers (2) projecteurs assure l'éclairage desdits premiers projecteurs (2) en fonction de la vitesse (V) du véhicule.

4. Dispositif d'éclairage selon la revendication 2 ou 3, **caractérisé en ce que** les moyens (5, 6, 7, 8) d'acquisition de données comportent des moyens (7) de détection de l'état d'un indicateur de changement de direction droite/gauche du véhicule, et **en ce que** le calculateur (4) commande les moyens d'actionnement (3) des premiers (2) projecteurs pour assurer l'allumage au moins du premier projecteur (2) situé du côté du changement de direction sélectionné.

5. Dispositif d'éclairage selon la revendication 4, **caractérisé en ce que**, lorsque le braquage des roues est supérieur à un seuil d'allumage (E3) déterminé dans la direction opposée à la direction sélectionnée par l'indicateur de changement de direction, le calculateur (4) de commande assure l'allumage au moins du premier projecteur (2) situé du côté du virage défini par le braquage des roues.

6. Dispositif d'éclairage selon la revendication 4, **caractérisé en ce que** lorsque le braquage des roues croît dans la direction opposée à la direction sélectionnée par l'indicateur de changement de direction, le calculateur (4) assure l'allumage au moins du premier projecteur (2) qui est situé du côté du braquage croissant des roues.

7. Dispositif d'éclairage selon la revendication 4 ou 5, **caractérisé en ce que** lorsque le braquage des roues est supérieur à un seuil d'allumage (E3) déterminé dans la direction opposée à la direction sélectionnée par l'indicateur de changement de direction, le calculateur (4) de commande assure la diminution ou l'extinction de l'éclairage du premier projecteur (2) qui est situé du côté sélectionné par l'indicateur (7) de changement de direction.

8. Dispositif d'éclairage selon la revendication 4 ou 6, **caractérisé en ce que** lorsque le braquage des roues croît dans la direction opposée à la direction sélectionnée par l'indicateur de changement de direction, le calculateur (4) de commande assure la diminution ou l'extinction de l'éclairage du premier projecteur (2) qui est situé du côté sélectionné par l'indicateur de changement de direction.

9. Dispositif d'éclairage selon l'une quelconque des revendications 2 à 8, **caractérisé en ce que** le véhicule comporte des moyens (8) de commande manuelle de l'allumage des premiers (2) projecteurs, les moyens (5, 6, 7, 8) d'acquisition de données comportant des moyens (8) de détection de l'état d'activation des moyens de commande manuelle, et **en ce que** le calculateur (4) commande les moyens d'actionnement (3) des premiers (2) projecteurs, pour assurer, indépendamment du braquage des roues, l'allumage du ou des premiers projecteurs (2) sélectionnés manuellement.

10. Dispositif d'éclairage selon l'une quelconque des revendications 2 à 9, **caractérisé en ce que** les moyens (5, 6, 7, 8) d'acquisition de données relatives aux conditions de fonctionnement du véhicule comportent un capteur (5) de mesure de l'angle (A) du volant, et **en ce que** le ou les calculateurs (3) de commande déterminent le braquage des roues en fonction de la mesure de l'angle (A) du volant du véhicule, les moyens (5, 6, 7, 8) d'acquisition de données comportant des moyens de détection du fonctionnement normal du capteur de mesure de l'angle (A) du volant, et **en ce que** le calculateur (4) inhibe la fonction d'allumage des premiers (2) projecteurs en fonction du braquage des roues lorsqu'une anomalie est détectée dans le fonctionnement du capteur (5) d'angle.

11. Dispositif d'éclairage selon l'une quelconque des revendications 2 à 10, **caractérisé en ce que** les moyens (5, 6, 7, 8) d'acquisition de données comportent des moyens de détection du fonctionnement normal des moyens d'actionnement (3) des premiers (2) projecteurs, et **en ce que** le calculateur (4) inhibe la fonction d'allumage des premiers projecteurs (2) en fonction du braquage des roues lorsque qu'une anomalie est détectée dans le fonctionnement dedits moyens d'actionnement (3).

## Patentansprüche

1. Beleuchtungsverfahren für ein Kraftfahrzeug mit mindestens zwei Scheinwerfern (1, 2) zum Aussenden von Kurvenstrahlen (F2), das einen Schritt des Ermittelns des Einschlags der Fahrzeugräder, einen Schritt des Vergleichens des Radeinschlags mit einem bestimmten ersten Einschlag-Grenzwert (α) und einen Schritt des Steuerns der Versorgungsspannung der Scheinwerfer in Abhängigkeit vom Radeinschlag aufweist, sodass zumindest der kurveninnere Scheinwerfer (2) angeschaltet wird, wenn der Radeinschlag den ersten Grenzwert (α) übersteigt, **dadurch gekennzeichnet, dass** es einen Schritt des Erfassens von Daten über eine weitere Betriebsbedingung des Fahrzeugs aufweist, um die Versorgungsspannung der Scheinwerfer in Abhängigkeit von dieser zusätzlichen Betriebsbedingung zu steuern.

2. Beleuchtungsvorrichtung für ein Kraftfahrzeug mit mindestens zwei ersten Scheinwerfern (2) zum Aussenden von Kurvenstrahlen (F2), zwei zweiten Scheinwerfern (1) zum Aussenden von Abblendlicht (F1), Mitteln (5, 6, 7, 8) zum Erfassen von Daten über die Betriebsbedingungen des Fahrzeugs, die den Radeinschlag des Fahrzeugs ermitteln können, Mitteln (3, 4) zum Steuern der Versorgungsspannung (T) der ersten Scheinwerfer (2) in Abhängigkeit vom Radeinschlag, sodass zumindest der kurveninnere erste Scheinwerfer (2) angeschaltet wird, wenn der Radeinschlag einen bestimmten Anschalt-Grenzwert (E3) übersteigt, **dadurch gekennzeichnet, dass** die Steuermittel (3, 4) in einem elektronischen Multiplex-Netz angeordnet sind und mindestens einen Rechner (4) umfassen, der mit den Datenerfassungs-Mitteln (5, 6, 7, 8) verbunden ist, sowie Mittel (3, 9) zum Betätigen der ersten Scheinwerfer (2) beziehungsweise der zweiten Scheinwerfer (1), die mit dem Rechner (4) verbunden sind, und **dadurch**, dass die Mittel (3) zum Betätigen der ersten Scheinwerfer (2) so ausgebildet sind und gesteuert werden, dass eine bestimmte und variable Spannung (T) an die ersten Scheinwerfer (2) in Abhängigkeit von den gewonnenen Daten über eine weitere Betriebsbedingung des Fahrzeugs geliefert wird.

3. Beleuchtungsvorrichtung nach Anspruch 2, **dadurch gekennzeichnet, dass** die Datenerfassungs-Mittel (5, 6, 7, 8) Mittel (6) zum Erfassen der Geschwindigkeit (V) des Fahrzeugs aufweisen und **dadurch**, dass der Rechner (4) zum Steuern der Mittel (3) zum Betätigen der ersten Scheinwerfer (2) für die Beleuchtung der ersten Scheinwerfer (2) in Abhängigkeit von der Geschwindigkeit (V) des Fahrzeugs sorgt.

4. Beleuchtungsvorrichtung nach Anspruch 2 oder 3, **dadurch gekennzeichnet, dass** die Datenerfassungs-Mittel (5, 6, 7, 8) Mittel (7) zum Erfassen des Zustands eines Fahrtrichtungsanzeigers nach rechts/links des Fahrzeugs aufweisen und **dadurch**, dass der Rechner (4) die Mittel (3) zum Betätigen der ersten Scheinwerfer (2) steuert, um für das Anschalten zumindest des ersten Scheinwerfers (2) zu sorgen, der auf der Seite der gewählten Richtungsänderung liegt.

5. Beleuchtungsvorrichtung nach Anspruch 4, **dadurch gekennzeichnet, dass** der Steuerrechner (4), wenn der Radeinschlag einen bestimmten Anschalt-Grenzwert (E3) in der entgegengesetzten Richtung zu der vom Fahrtrichtungsanzeiger gewählten Richtung überschreitet, für das Anschalten zumindest des ersten Scheinwerfers (2) sorgt, der sich auf der Seite der vom Radeinschlag definierten Kurve befindet.

6. Beleuchtungsvorrichtung nach Anspruch 4, **dadurch gekennzeichnet, dass** der Rechner (4) für das Anschalten zumindest des ersten Scheinwerfers (2) sorgt, der sich auf der Seite des zunehmenden Radeinschlags befindet, wenn der Radeinschlag in entgegengesetzter Richtung zu der vom Fahrtrichtungsänderungsanzeiger gewählten Richtung zunimmt.

7. Beleuchtungsvorrichtung nach Anspruch 4 oder 5, **dadurch gekennzeichnet, dass** der Steuerrechner (4) für die Verringerung oder das Abschalten der Beleuchtung des ersten Scheinwerfers (2) sorgt, der sich auf der vom Fahrtrichtungsanzeiger (7) gewählten Seite befindet, wenn der Radeinschlag einen bestimmten Anschalt-Grenzwert (E3) in der entgegengesetzten Richtung zu der vom Fahrtrichtungsanzeiger gewählten Richtung übersteigt.

8. Beleuchtungsvorrichtung nach Anspruch 4 oder 6, **dadurch gekennzeichnet, dass** der Steuerrechner (4) für die Verringerung oder das Abschalten der Beleuchtung des ersten Scheinwerfers (2) sorgt, der sich auf der vom Fahrtrichtungsanzeiger gewählten Seite befindet, wenn der Radeinschlag in der entgegengesetzten Richtung zu der vom Fahrtrichtungsanzeiger gewählten Richtung zunimmt.

9. Beleuchtungsvorrichtung nach einem der Ansprüche 2 bis 8, **dadurch gekennzeichnet, dass** das Fahrzeug Mittel (8) zum manuellen Steuern des Anschaltens der ersten Scheinwerfer (2) aufweist, wobei die Datenerfassungs-Mittel (5, 6, 7, 8) Mittel zum Erfassen des Betätigungszustands der Mittel zum manuellen Steuern umfassen, und **dadurch**, dass der Rechner (4) die Mittel (3) zum Betätigen der ersten Scheinwerfer (2) steuert, um unabhängig vom Radeinschlag für das Anschalten des oder der manuell gewählten Scheinwerfer (2) zu sorgen.

10. Beleuchtungsvorrichtung nach einem der Ansprüche 2 bis 9, **dadurch gekennzeichnet, dass** die Mittel (5, 6, 7, 8) zum Erfassen von Daten über die Betriebsbedingungen des Fahrzeugs einen Sensor (5) zum Messen des Lenkwinkels (A) aufweisen und **dadurch**, dass der oder die Steuerrechner den Radeinschlag in Abhängigkeit von der Messung des Lenkwinkels (A) des Fahrzeugs bestimmen, wobei die Datenerfassungs-Mittel (5, 6, 7, 8) Mittel zum Erfassen des normalen Funktionierens des Sensors zum Messen des Lenkwinkels (A) aufweisen, und **dadurch**, dass der Rechner (4) die Funktion des Anschaltens der ersten Scheinwerfer (2) in Abhängigkeit vom Radeinschlag hemmt, wenn in der Funktionsweise des Winkelsensors (5) eine Anomalie festgestellt wird.

11. Beleuchtungsvorrichtung nach einem der Ansprüche 2 bis 10, **dadurch gekennzeichnet, dass** die Datenerfassungs-Mittel (5, 6, 7, 8) Mittel zum Erfassen des normalen Funktionierens der Mittel (3) zum Betätigen der ersten Scheinwerfer (2) aufweisen und **dadurch**, dass der Rechner (4) die Funktion des Anschaltens der ersten Scheinwerfer (2) in Abhängigkeit vom Radeinschlag hemmt, wenn eine Anomalie in der Funktionsweise der Betätigungsmittel (3) festgestellt wird.

## Claims

1. Method of lighting for a motor vehicle having at least two headlights (1, 2) for emitting cornering beams (F2), comprising a step of determining the amount of turning of the wheels of the vehicle, a step of comparing the amount of turning of the wheels with a first predetermined turning threshold (α), and a step of controlling the supply voltage to the headlights as a function of the amount of turning of the wheels, in order to switch on at least the headlight (2) that is located on the inside of the bend when the amount of turning of the wheels is greater than the first threshold (α), **characterised in that** it comprises a step of acquisition of data relating to another operating condition of the vehicle in order to control the supply voltage to the headlights as a function of this additional operating condition.

2. Lighting device for a motor vehicle comprising at least two first headlights (2) for emitting cornering beams (F2), two second headlights (1) for emitting code beams (F1), means (5, 6, 7, 8) for acquisition of data relating to the operating conditions of the vehicle capable of determining the amount of turning of the wheels of the vehicle, means (3, 4) for controlling the supply voltage (T) to the first headlights (2) as a function of the amount of turning of the wheels, in order to switch on at least the first headlight (2) that is located on the inside of the bend when the amount of turning of wheels is greater than a predetermined lighting threshold (E3), **characterised in that** the control means (3, 4) are arranged in a multiplexed electronic network and comprise at least one calculator (4) connected to the data acquisition means (5, 6, 7, 8), respective means (3, 9) for actuating the first (2) and second (1) headlights connected to the calculator (4), and **in that** the means (3) for actuating the first (2) headlights are configured and controlled so as to deliver a predetermined and variable voltage (T) to the first headlights (2) as a function of the data gathered and relating to another operating condition of the vehicle.

3. Lighting device according to Claim 2, **characterised in that** the data acquisition means (5, 6, 7, 8) comprise means (6) for determining the speed (V) of the vehicle, and **in that** the calculator (4) for controlling the means (3) for actuating the first (2) headlights ensures that said first headlights (2) are switched on as a function of the speed (V) of the vehicle.

4. Lighting device according to Claim 2 or 3, **characterised in that** the data acquisition means (5, 6, 7, 8) comprise means (7) for detecting the status of a right/left direction change indicator of the vehicle, and **in that** the calculator (4) controls the means (3) for actuating the first (2) headlights in order to switch on at least the first headlight (2) located on the side of the selected direction change.

5. Lighting device according to Claim 4, **characterised in that**, when the amount of turning of the wheels is greater than a predetermined lighting threshold (E3) in the opposite direction from the direction selected by the direction change indicator, the control calculator (4) switches on at least the first headlight (2) located on the side of the bend defined by the amount of turning of the wheels.

6. Lighting device according to Claim 4, **characterised in that**, when the amount of turning of the wheels rises in the opposite direction from the direction selected by the direction change indicator, the calculator (4) switches on at least the first headlight (2) that is located on the side of the increasing amount of turning of the wheels.

7. Lighting device according to Claim 4 or 5, **characterised in that** when the amount of turning of the wheels is greater than a predetermined lighting threshold (E3) in the opposite direction from the direction selected by the direction change indicator, the control calculator (4) ensures the dimming or switching off of the lighting of the first headlight (2) that is located on the side selected by the direction change indicator (7).

8. Lighting device according to Claim 4 or 6, **characterised in that** when the amount of turning of the wheels rises in the opposite direction from the direction selected by the direction change indicator, the control calculator (4) ensures the dimming or switching off of the lighting of the first headlight (2) that is located on the side selected by the direction change indicator.

9. Lighting device according to any one of Claims 2 to 8, **characterised in that** the vehicle comprises means (8) for manually controlling the switching on of the first (2) headlights, the data acquisition means (5, 6, 7, 8) comprising means (8) for detecting the activation status of the manual control means, and **in that** the calculator (4) controls the means (3) for actuating the first (2) headlights, in order to ensure the switching on of the first headlights (2) selected manually, irrespective of the amount of turning of the wheels.

10. Lighting device according to any one of Claims 2 to 9, **characterised in that** the means (5, 6, 7, 8) for acquisition of data relating to the operating conditions of the vehicle comprise a sensor (5) for measuring the angle (A) of the steering wheel, and **in that** the control calculator(s) (3) determine the amount of turning of the wheels as a function of the measurement of the angle (A) of the steering wheel of the vehicle, the data acquisition means (5, 6, 7, 8) comprising means for detection the normal operation of the sensor of the angle (A) of the steering wheel, and **in that** the calculator (4) inhibits the function of switching on the first (2) headlights as a function of the amount of turning of the wheels when an anomaly is detected in the operation of the angle sensor (5).

11. Lighting device according to any one of Claims 2 to 10, **characterised in that** the data acquisition means (5, 6, 7, 8) comprise means for detecting the normal operation of the means (3) for actuating the first (2) headlights, and **in that** the calculator (4) inhibits the function of switching on the first headlights (2) as a function of the amount of turning of the wheels when an anomaly is detected in the operation of said actuation means (3).
